# FASCICULE DE BREVET EUROPEEN

(11) **EP 1 776 016 B1**
(45) Date de publication et mention de la délivrance du brevet: **18.06.2008**
(21) Numéro de dépôt: 05798444.5
(22) Date de dépôt: 17.08.2005
(51) Int. Cl.: A23K 1/16

(54) **ADDITIF ALIMENTAIRE**
NAHRUNGSMITTELZUSATZ
FEED ADDITIVE

(30) Priorité: 17.08.2004 EP 04019460
(43) Date de publication de la demande: 25.04.2007
(73) Titulaire: Lesaffre et Compagnie, 75001 Paris (FR)
(72) Inventeur: AUCLAIR, Eric, F-59710 Avelin (FR); KALKHOVEN, David, F-59000 Lille (FR); TERMIGNON, Pascal, F-59700 Marcq en Baroeul (FR); BONANNO, Laurent, Michel, F-94500 Champigny s/Marne (FR); ORIOL, Eric, F-94500 Champigny s/ Marne (FR)
(74) Mandataire: Gallois, Valérie
(86) Numéro de dépôt international: PCT/FR2005/002095
(87) Numéro de publication internationale: WO 2006/021693

(56) Documents cités:
- EP-A- 0 164 848
- WO-A-01/89316
- US-A- 3 686 392
- DATABASE WPI Section Ch, Week 200223 Derwent Publications Ltd., London, GB; Class B04, AN 2002-175034 XP002308455 & JP 2001 340055 A (NIPPON SEISHI KK) 11 décembre 2001 (2001-12-11)
- HARTINI,S. , CHOCT.M., HINCH,G.N., NOLAN,J.V.: "Effect of diet composition and beak trimming on the incidence of cannibalism in laying hens" AUST.POULTRY SYMPOSIUM, no. 13, 2001, pages 216-219, XP001203979
- CHOCT,M., HARTINI,S., HINCH,G.N. & NOLAN, J.V.: "Dietary prevention of cannibalism in layers" AUST.POULTRY SYMPOSIUM, no. 14, 2002, page 157, XP001203980
- WOHLT J E ET AL: "YEAST CULTURE TO IMPROVE INTAKE, NUTRIENT DIGESTIBILITY, AND PERFORMANCE BY DAIRY CATTLE DURING EARLY LACTATION1" JOURNAL OF DAIRY SCIENCE, AMERICAN DAIRY SCIENCE ASSOCIATION, SAVOY, IL, US, vol. 74, no. 4, 1 avril 1991 (1991-04-01), pages 1395-1400, XP000214754 ISSN: 0022-0302

## Description

La présente invention concerne la prévention et/ou le traitement de cannibalisme chez les animaux d'élevage.

De nos jours, l'élevage industriel moderne s'efforce de produire la plus grande quantité de viande, de lait et d'oeufs rapidement et à bon marché, dans des espaces réduits de production. Dans certains de ces élevages intensifs d'animaux, on peut observer des syndromes de type cannibalisme. Le terme « cannibalisme », tel qu'utilisé dans le présent contexte, n'est pas limité à des cas, en pratique, très rares de consommation d'un animal par des congénères. Dans le présent contexte, le terme « cannibalisme » concerne tout incident dans lequel un animal blesse un congénère en le mordant. Le terme « cannibalisme » couvre ainsi le piquage parfois observé dans l'élevage de volailles et parmi les poules pondeuses et dans l'élevage du gibier à plumes, et la caudophagie (morsure de la queue et/ou des oreilles) parfois observée dans l'élevage de porcins, et le comportement agressif chez les animaux ruminants. De telles instances de cannibalisme nuisent au bien-être des animaux et réduisent le rendement de l'élevage.

Certains produits commerciaux visant à améliorer le bien-être animal sont disponibles sur le marché. Par exemple, le laboratoire vétérinaire Ceva Santé Animale a commercialisé en 2000, sous le nom de Suilence®, une phéromone visant à réduire la caudophagie dans l'élevage de porcins. L'acide ascorbique a également été utilisé comme complément alimentaire pour diminuer le cannibalisme chez les animaux d'élevage.

La présente invention concerne la constatation que, de manière surprenante, il est possible de prévenir et/ou de traiter (réduire) le cannibalisme chez les animaux d'élevage par l'administration aux dits animaux d'un dérivé de levure contenant des 5'-nucléotides et/ou des peptides, lesdits peptides ayant un poids moléculaire d'au moins 1000 daltons, de préférence de 1000 à 10000 daltons.

Dans le brevet US-A-5188851, il a été proposé d'incorporer des 5'-nucléotides dans l'alimentation de poissons de culture pour augmenter leur appétence.

Dans le brevet US-A-3686392, l'incorporation de 5'-nucleotides dans l'alimentation animale est proposée pour une gamme d'animaux d'élevage afin d'accélérer la croissance des animaux et d'améliorer l'efficacité de cette croissance par rapport à la quantité d'alimentation consommée.

Dans les deux brevets US-B-6248716 et US-B-6184208, de nombreux peptides sont proposés pour la modulation de processus physiologiques, tels que le gain de poids, la croissance de l'épithélium ou de cheveux et la cicatrisation, et pour stimuler des processus réparateurs et anaboliques, en tant qu'analgésiques et en tant que calmants. Dans la demande de brevet WO02/067959, des peptides de poids moléculaire inférieur à 10 000 daltons sont extraits d'une levure soumise à un stress physique ou chimique avant autolyse. Ces peptides sont utilisés chez l'Homme notamment comme agent anti-stress, agent calmant et facteur neurotrophique.

DATABASE WPI Section Ch, Week 200223 Derwent Publications Ltd., London, GB; Class B04, AN 2002-175034 XP002308455 & JP 2001 340055 A (NIPPON SEISHI KK) 11 décembre 2001 (2001-12-11) divulgue l'utilisation des 5'-nucléotides dans l'alimentation d'animeaux d'élevage pour augmenter leur envie de se nourrir et pour améliorer leur croissance et pour réduire leur mortalité.

La présente invention concerne une méthode de prévention et/ou de réduction du cannibalisme chez les animaux d'élevage comprenant l'administration d'un dérivé de levure contenant des 5'-nucléotides et/ou des peptides d'un poids moléculaire d'au moins 1000 daltons, de préférence de 1000 à 10000 daltons. De préférence, la présente invention concerne une méthode de prévention et/ou de réduction du cannibalisme chez les animaux d'élevage comprenant l'administration de 5'-nucléotides et/ou de peptides d'un poids moléculaire d'au moins 1000 daltons, de préférence de 1000 à 10000 daltons.

Les nucléotides sont des esters phosphoriques de nucléoside, comprenant obligatoirement :
- une base azotée purique ou pyrimidique,
- un pentose : le ribose ou le désoxyribose, et
- une ou plusieurs molécules d'acide phosphorique.

Dans le contexte de la présente invention, le terme « 5'-nucléotides » couvre les 5'-nucléotides en tant que tels, ainsi que leurs sels, hydrates, sels hydratés, et autres formes physiologiquement acceptables. En particulier, , les 5' nucléotides comprennent au moins un groupe phosphate en 5'.

Dans le présent contexte, le terme « peptide » couvre les peptides en tant que tels, ainsi que leurs sels et autres formes physiologiquement acceptables.

Selon l'invention, les 5'-nucléotides sont ou comprennent avantageusement des ribonucléotides.

De manière utile, les 5'-nucléotides, et notamment les 5'-ribonucléotides, sont ou comprennent des 5'-nucléotides monophosphates.

Ils sont ou comprennent de préférence des mononucléotides.

Les 5'-nucléotides peuvent notamment être ou comprendre du 5'-IMP (inosine 5'-monophosphate), du 5'-GMP (guanosine 5'-monophosphate), du 5'-AMP (adénosine 5'-monophosphate), du 5'-UMP (uridine 5'-monophosphate) ou du 5'-CMP (cytidine 5'-monophosphate). Ces 5'-nucléotides sont de préférence utilisés en combinaison d'au moins deux desdits 5'nucléotides, plus préférentiellement sous forme d'une combinaison de trois desdits 5'nucléotides, et encore plus préférentiellement d'une combinaison de quatre ou cinq desdits 5'nucléotides. Ils peuvent comprendre par exemple une combinaison de 5'-IMP avec un 5'-nucléotide du groupe formé par les 5'-GMP, 5'-AMP, 5'-UMP et 5'-CMP ; ou encore une combinaison du 5'-GMP avec un 5'-nucléotide choisi dans groupe formé par les 5'-AMP, 5'-UMP et 5'-CMP ; une combinaison de 5'-AMP avec du 5'-UMP ou du 5'-CMP ; ou encore une combinaison de 5'-UMP avec du 5'-CMP. Ils peuvent aussi comprendre une combinaison de 5'-IMP avec une des combinaisons du groupe formé par : le 5'-GMP et le 5'-AMP, le 5'-GMP et le 5'-UMP, le 5'-GMP et le 5'-CMP, le 5'-AMP et le 5'-UMP, le 5'-AMP et le 5'-CMP, le 5'-UMP et le 5'-CMP. Ils peuvent également comprendre une combinaison de 5'-GMP avec une combinaison du groupe formé par : le 5'-AMP et le 5'-UMP, le 5'-AMP et le 5'-CMP, et le 5'-UMP et le 5'-CMP.IIs peuvent aussi comprendre une combinaison de quatre des dits 5'-nucléotides ou encore une combinaison des cinq dits 5'-nucléotides. De préférence ils comprennent une combinaison de 5'-GMP, 5'-UMP, 5'-CMP et 5'-AMP ; ou une combinaison de 5'-GMP, 5'-UMP, 5'-CMP et 5'-IMP ; ou encore une combinaison de 5'-GMP, 5'-UMP, 5'-CMP, 5'-IMP et 5'-AMP.

Les 5'-nucléotides peuvent être obtenus par différents procédés de fabrication et de synthèse. Pour la présente invention, les 5'-nucléotides, et en particulier les exhausteurs de goût 5'-GMP et 5'-IMP, peuvent être obtenus par l'un quelconque de ces procédés.

Suivant une forme d'exécution préférée de l'invention, le dérivé de levure, les 5'-nucléotides et/ou les peptides sont, au moins partiellement et de préférence dans leur totalité, issus de cellules de levure, plus préférentiellement de cellules de levure du genre *Candida* ou du genre *Saccharomyces.* De préférence, lesdites cellules de levure appartiennent à l'espèce *Saccharomyces cerevisiae* ou à l'espèce *Candida utilis* (les espèces de *Candida* qui sont alimentaires sont vulgairement appelées *Torula* de manière générale).

L'invention concerne donc également l'apport à des animaux d'élevage d'un dérivé de levure, et en particulier un dérivé de levure contenant des 5'-nucléotides et/ou des peptides d'un poids moléculaire d'au moins 1000 daltons, de préférence de 1000 à 10000 daltons, notamment pour la prévention et/ou le traitement du cannibalisme chez les animaux d'élevage. Le dérivé de levure peut notamment être un hydrolysat enzymatique de levure et, en particulier, un extrait de levure, tel qu'un extrait de levure issu d'un hydrolysat enzymatique de levure par élimination de matières non-hydrosolubles. Les peptides de poids moléculaire d'au moins 1000 daltons, de préférence de 1000 à 10000 daltons, dérivés de levure proviennent de préférence d'un dérivé de levure, de préférence sous forme d'un hydrolysat enzymatique de levure, et de manière encore plus préférentielle sous forme d'un extrait de levure.

Les 5'-nucléotides 5'-GMP et 5'-M' sont connus pour leurs propriétés d'exhausteurs de goût particulièrement intéressantes. Il est notamment connu d'obtenir des extraits de levure à haute teneur en ces 5'-nucléotides et donc à effet exhausteur de goût par des procédés adaptés pour la fabrication d'extraits de levure.

En effet, dans les procédés conventionnels pour la fabrication d'extraits de levure qui comprennent une autolyse ou une hydrolyse enzymatique, essentiellement par les enzymes endogènes de la levure, l'acide ribonucléique (ARN) de la levure est principalement décomposé en nucléotides insipides comme l'adénosine 3'-monophosphate (3'-AMP) et la guanosine 3'-monophosphate (3'-GMP), en bases, riboses et phosphates. Ces enzymes endogènes de la levure sont essentiellement des ribonucléases, des 3'-nucléotidases spécifiques, des phosphatases acides. Ces procédés conventionnels ne permettent donc pas d'obtenir des extraits de levure riches en 5'-nucléotides.

Des procédés adaptés pour l'obtention de dérivés de levure riche en 5'-nucléotides sont décrits dans l'ouvrage de référence « Yeast Technology » de G.Reed et T.W. Nagodawithana, 2ème édition (Van Nostrand Reinhold, ISBN 0-442 - 31892 - 8) pages 382 à 385.

Il est notamment connu de préparer des extraits de levure riches en 5'-nucléotides par hydrolyse enzymatique de levures en présence de 5'-phosphodiestérase avec désactivation des phosphatases et nucléases endogènes de la levure. On obtient ainsi des extraits de levure contenant les 5'-nucléotides suivants : 5'-GMP, 5'-UMP, 5'-CMP et 5'-AMP (correspondant aux quatre bases de l'ARN). Contrairement au 5'-GMP, le 5'-AMP n'est pas efficace comme exhausteur de goût. Toutefois, le 5'-AMP peut être converti en l'exhausteur de goût 5'-IMP par ajout d'AMP déaminase. On obtient ainsi un extrait de levure contenant du 5'-GMP, du 5'-UMP, du 5'-CMP, du 5'-IMP, et éventuellement encore une quantité résiduelle de 5'-AMP.

Parmi les procédés adaptés connus pour la fabrication de dérivés de levure riche en 5'-nucléotides et/ou en peptides de poids moléculaire d'au moins 1000 daltons, et de préférence de 1000 à 10000 daltons, on peut également citer les procédés suivants :

Le brevet US-A-4 810 509 décrit un procédé de production d'extrait de levure riches en 5'-nucléotides comprenant (1) une étape de chauffage d'une suspension de levure entre 55°C et 70°C, (2) une étape d'autolyse des cellules de levure à pH 8 à 10, (3) un ajustement du pH de la suspension de levures autolysées entre 5 et 7, (4) une étape de chauffage de cette suspension à 90°C ou plus , (5) l'élimination du matériel insoluble de cette suspension chauffée et (6) la récupération de l'extrait de levure contenant des 5'-nucléotides. Un traitement réalisé après l'autolyse avec une enzyme 5'-adenylate déaminase (= AMP déaminase) permet de convertir le 5'-AMP en 5'-IMP qui est plus odorant donc plus recherché.

Le procédé selon EP-A-0299078 consiste à chauffer une suspension de levure contenant une grande quantité d'ARN entre 80°C et 120 °C (destruction des ribonucléases), puis à extraire les ARN avec un traitement alcalin et à les découper en 5'-nucléotides par l'action d'une 5'-phosphodiestérase, et optionnellement d'une déaminase afin d'obtenir un extrait riche en 5'-GMP et 5'-IMP.

Le procédé selon WO02/067959 consiste à préparer un dérivé de levure par une autolyse réalisée à une température supérieure à 35°C, par exemple comprise entre 35-70°C, de préférence entre 50-60°C. Les levures sont préférentiellement hydrolysées pendant ou après l'autolyse avec une ou plusieurs protéases. Facultativement, le produit peut être centrifugé et une étape supplémentaire d'ultrafiltration du surnageant peut être réalisée. Il peut ainsi être utilisé pour la prévention et/ou le traitement du cannibalisme chez les animaux d'élevage. D'autres techniques classiques peuvent être utilisées pour la purification du surnageant, notamment les techniques de purification par chromatographie.

L'invention concerne notamment la prévention et/ou le traitement du cannibalisme chez les animaux d'élevage par l'administration aux dits animaux d'un dérivé de levure, ledit dérivé de levure pouvant être un hydrolysat enzymatique de levure contenant des membranes et/ou fragments de membranes non-hydrosolubles des cellules de levure, ou un extrait de levure obtenu à partir d'un hydrolysat enzymatique de levure par élimination desdits membranes et fragments de membranes, et en particulier un tel dérivé de levure contenant des 5'-nucléotides et/ou des peptides à poids moléculaire d'au moins 1000 daltons, de préférence de 1000 à 10000 daltons . De tels dérivés de levure peuvent notamment être obtenus par les procédés cités ci-dessus favorisant la formation de 5'-nucléotides.

Les dérivés de levure ont, de manière utile, un taux de dégradation exprimé par le rapport N aminé /N total, inférieur ou égal à 40%, de préférence de 25% à 40%. « N » est le symbole de l'azote. « N total » est la teneur en azote mesurée selon la méthode de Kjeldahl et « N aminé » est la teneur en azote mesurée par la titration de l'azote formol selon Sørensen.

Les dérivés de levure contenant des 5'-nucléotides et/ou des peptides d'au moins 1000 daltons, et notamment de 1000 à 10000 daltons, sont de préférence des dérivés de *Candida* ou *Saccharomyces,* et encore de préférence des dérivés de *Saccharomyces cerevisiae* ou de *Candida utilis.*

La levure est de préférence une levure de boulangerie. Une levure de boulangerie est une levure appartenant au genre *Saccharomyces,* fabriquée à l'aide essentiellement d'une multiplication ou culture aérobie comme enseigné dans le chapitre 6 « Baker's yeast production » de l'ouvrage de référence « Yeast technology » cité ci-dessus .

La levure peut également être une levure de brasserie, une levure oenologique ou une levure de distillerie, qui sont des sous-produits de la fabrication de la bière, du vin, respectivement de l'alcool et qui ont donc servi à fabriquer de la bière, du vin, ou de l'alcool avant leur récupération pour en faire un dérivé de levure contenant des 5'-nucléotides et/ou des peptides d'un poids moléculaires d'au moins 1000 daltons.

Les dérivés de levure présentent avantageusement une teneur en 5'-nucléotides sur matières sèches d'au moins 2% en masse, de préférence d'au moins 3% en masse, plus préférentiellement d'au moins 4% en masse et encore plus préférentiellement d'au moins 5% en masse, et/ou une teneur sur matières sèches en peptides à poids moléculaire de 1000 à 10000 daltons, d'au moins 4% en masse, de préférence d'au moins 6% en masse et encore plus préférentiellement d'au moins 8% en masse.

Suivant l'invention, les dérivés de levure contenant des 5'-nucléotides et/ou des peptides à masse moléculaire d'au moins 1000 daltons peuvent présenter une teneur en matière sèche d'au moins 90% en masse, de préférence d'au moins 94% en masse et encore plus préférentiellement d'au moins 96% en masse.

Selon un mode de réalisation particulièrement préféré, le dérivé de levure contient 6,8% de 5'-nucléotides, au moins 6% de peptides de poids moléculaire de 1000 à 10000 daltons et a un taux de N total déterminé par la méthode de Kjeldahl d'environ 11,3%, un taux de N aminé mesuré par la méthode de titration de l'azote formol selon Sørensen de l'ordre de 4,1% et un taux de protéines (6,25x nitrogène) d'environ 70,6%. Ce produit, commercialisé par Bio Springer (94701 Maisons-Alfort, France), est décrit plus en détails dans le tableau 1.

La présente invention est efficace pour la prévention et/ou le traitement du cannibalisme chez un grand nombre d'animaux d'élevage tels que les porcins, la volaille et les ruminants, tels que les ovins et les bovins. Elle concerne en particulier la prévention et/ou le traitement du piquage chez la volaille, en particulier chez les gallinacés, ainsi que la prévention et/ou le traitement de la caudophagie chez les porcins. Les gallinacés sont de préférence choisis parmi les coqs, chapons, poules, poulets, pintades, dindes et leurs poussins, tels que notamment les coqs à chair, chapons à chair, poules à chair et poulets à chair et les poules pondeuses. Les porcins sont de préférence choisis parmi les truies, les porcs à chair et les porcelets à chair. Les ruminants sont de préférence choisis parmi les ovins, les bovins à l'engrais, les bovins reproducteurs, veaux et vaches laitières. La présente invention est également efficace pour la prévention et/ou le traitement du cannibalisme chez les gibiers à plumes et notamment les faisans, perdrix rouges et grises, cailles et canards à col vert.

Suivant l'invention, le dérivé de levure contenant les 5'-nucléotides et/ou les peptides d'un poids moléculaire d'au moins 1000 daltons, de préférence de 1000 à 10000 daltons, les 5'-nucléotides et/ou peptides dérivés de levure d'un poids moléculaire d'au moins 1000 daltons, de préférence de 1000 à 10000 daltons, sont avantageusement administrés aux animaux par voie orale. Ils peuvent être administrés sous différentes formes ou présentations, notamment sous forme solide - comme notamment sur un support granulaire, tel qu'une farine d'alimentation animale, ou sous forme d'une poudre, de granules, de microgranules ou de particules - ou liquide -de préférence à base d'eau-, seuls ou en combinaison avec d'autres ingrédients, comme, par exemple, un ou plusieurs autres ingrédients alimentaires et/ou un ou plusieurs autres ingrédients nutritionnels comme un ou plusieurs minéraux alimentaires et/ou une ou plusieurs vitamines, et/ou incorporés dans les boissons ou dans l'alimentation principale.

Ainsi, suivant l'invention, le dérivé de levure, les 5'-nucléotides et/ou les peptides sur support granulaire peuvent être incorporés dans des farines pour poules pondeuses ou poulets de chair ou dans des farines pour porcins, et la préparation sous forme de granules peut être incorporée dans des mélanges à base de grains ou céréales concassés et/ou entiers pour volailles, comme notamment les mélanges pour poules pondeuses. La préparation peut également être une partie de la composition d'un aliment pour l'alimentation animale sous forme extrudée, par exemple d'un aliment pour porcins.

D'une manière générale, pour la prévention et/ou le traitement de la caudophagie chez les porcins, les 5'-nucléotides sont de préférence administrés en une quantité d'au moins 0, 1 g par animal par semaine, de préférence d'au moins 0,2g par semaine et animal, et plus préférentiellement encore d'au moins 0,4g par semaine et animal. Les peptides dérivés de levure d'au moins 1000 daltons, avantageusement de 1000 à 10000 daltons, sont de préférence administrés en une quantité d'au moins 0,15g par semaine et animal, de préférence d'au moins 0,30g et plus préférentiellement encore d'au moins 0,60g par semaine et animal. Pour la prévention et/ou le traitement de la caudophagie chez les porcins, le dérivé de levure contenant les 5'-nucléotides et/ou les peptides d'au moins 1000 daltons, avantageusement de 1000 à 10000 daltons, est administré de préférence en une quantité hebdomadaire d'au moins 10mg/kg de poids vif, plus préférentiellement d'au moins 20mg/kg de poids vif par semaine par animal, de manière encore plus préférentielle d'au moins 50mg/kg de poids vif par semaine par animal.

D'une manière générale, pour la prévention et/ou le traitement du piquage chez les coqs, poules ou poulets et le gibier à plumes, les 5'-nucléotides sont de préférence administrés en une quantité d'au moins 0,001g par semaine et animal, de préférence d'au moins 0,002g par semaine et animal, et plus préférentiellement encore d'au moins 0,003g par semaine et animal. Les peptides dérivés de levure d'au moins 1000 daltons, avantageusement de 1000 à 10000 daltons, sont de préférence administrés en une quantité d'au moins 0,002g par semaine et animal, de préférence d'au moins 0,003g et plus préférentiellement encore d'au moins 0,004g par semaine et animal. Pour la prévention et/ou le traitement du piquage chez les coqs, poules ou poulets et le gibier à plumes, le dérivé de levure contenant les 5'-nucléotides et/ou les peptides d'au moins 1000 daltons, avantageusement de 1000 à 10000 daltons, est administré de préférence en une quantité hebdomadaire d'au moins 5mg/kg de poids vif, plus préférentiellement d'au moins 10mg/kg de poids vif par semaine et animal, de manière encore plus préférentielle d'au moins 25mg/kg de poids vif par semaine et animal.

De manière avantageuse, le traitement est effectué sur plusieurs semaines et comporte préférentiellement deux phases caractérisées par des doses hebdomadaires différentes qui peuvent être déterminées selon l'état pathologique de l'animal.

De manière avantageuse, pour le traitement du cannibalisme modéré ou sévère chez les animaux d'élevage et en particulier chez les porcins, les ruminants, la volaille et le gibier à plumes, les 5'-nucléotides, les peptides dérivés de levure et/ou les dérivés de levure contenant les 5'-nucléotides et/ou les peptides d'au moins 1000 daltons, avantageusement de 1000 à 10000 daltons sont de préférence administrés en une dose hebdomadaire répartie en une ou plusieurs fois dans la semaine, préférentiellement réparties en trois administrations au cours de la semaine. Cette première phase dure préférentiellement une semaine. Les semaines suivantes constituent la deuxième phase de traitement pendant laquelle la dose hebdomadaire peut être réduite. Préférentiellement la dose hebdomadaire administrée pendant la deuxième phase de traitement est réduite d'un facteur trois par rapport à la dose hebdomadaire administrée pendant la première phase. La dose hebdomadaire de la deuxième phase est préférentiellement répartie en une ou plusieurs prises dans la semaine, préférentiellement répartie en une prise pour le traitement d'un cannibalisme modéré et en deux prises pour le traitement d'un cannibalisme sévère. La durée de traitement de la deuxième phase est d'au moins trois semaines pour le traitement d'un cannibalisme modéré et d'au moins cinq semaines pour le traitement d'un cannibalisme sévère. De manière préférentielle, le traitement est maintenu jusqu'à disparition des symptômes, et peut par exemple être maintenu pendant une durée d'environ 26 semaines.

De manière avantageuse, pour le traitement d'un cannibalisme modéré chez les porcins, les gibiers à plumes et la volaille, les doses hebdomadaires par animal sont préférentiellement définies comme suit:
- pour l'administration du dérivé de levure, la dose hebdomadaire est comprise entre 30mg/kg de poids vif et 150mg/kg de poids vif, et préférentiellement de l'ordre de 75mg/kg de poids vif lors de la première phase puis elle est comprise entre 10mg/kg de poids vif et 50mg/kg de poids vif lors de la deuxième phase, préférentiellement de l'ordre de 25mg/kg de poids vif.
- pour l'administration de peptides de poids moléculaire d'au moins 1000 daltons, avantageusement de 1000 à 10 000 daltons, la dose hebdomadaire est comprise entre 30mg/kg de poids vif et 60mg/kg de poids vif, et préférentiellement de l'ordre de 42mg/kg de poids vif lors de la première phase puis elle est comprise entre 10mg/kg de poids vif et 20mg/kg de poids vif lors de la deuxième phase, préférentiellement de l'ordre de 14mg/kg de poids vif.
- pour l'administration de 5'-nucléotides, la dose hebdomadaire est comprise entre 4,5mg/kg de poids vif et 6mg/kg de poids vif, et préférentiellement de l'ordre de 5,25mg/kg de poids vif lors de la première phase puis elle est comprise entre 1,5mg/kg de poids vif et 2mg/kg de poids vif lors de la deuxième phase, préférentiellement de l'ordre de 1,75mg/kg de poids vif.

De manière avantageuse, pour le traitement d'un cannibalisme modéré chez les ruminants, les doses hebdomadaires précédemment citées pour le traitement des porcins et volaille sont multipliées par un facteur 4, soit préférentiellement définies comme suit par animal:
- pour l'administration du dérivé de levure, la dose hebdomadaire est comprise entre 120mg/kg de poids vif et 600mg/kg de poids vif, et préférentiellement de l'ordre de 300mg/kg de poids vif lors de la première phase puis elle est comprise entre 40mg/kg de poids vif et 200mg/kg de poids vif lors de la deuxième phase, préférentiellement de l'ordre de 100mg/kg de poids vif.
- pour l'administration de peptides de poids moléculaire d'au moins 1000 daltons, avantageusement de 1000 à 10 000 daltons, la dose hebdomadaire est comprise entre 120mg/kg de poids vif et 240mg/kg de poids vif, et préférentiellement de l'ordre de 168mg/kg de poids vif lors de la première phase puis elle est comprise entre 40mg/kg de poids vif et 80mg/kg de poids vif lors de la deuxième phase, préférentiellement de l'ordre de 56mg/kg de poids vif.
- pour l'administration de 5'-nucléotides, la dose hebdomadaire est comprise entre 18mg/kg de poids vif et 24mg/kg de poids vif, et préférentiellement de l'ordre de 21mg/kg de poids vif lors de la première phase puis elle est comprise entre 6mg/kg de poids vif et 8mg/kg de poids vif lors de la deuxième phase, préférentiellement de l'ordre de 7mg/kg de poids vif.

Les doses précitées utiles pour le traitement d'un cannibalisme modéré sont doublées pour le traitement d'un cannibalisme sévère. Ainsi, de manière avantageuse, pour le traitement d'un cannibalisme sévère chez les porcins, le gibier à plumes et la volaille, les doses hebdomadaires par animal sont préférentiellement définies comme suit:
- pour l'administration du dérivé de levure, la dose hebdomadaire est comprise entre 60mg/kg de poids vif et 300mg/kg de poids vif, et préférentiellement de l'ordre de 150mg/kg de poids vif lors de la première phase puis elle est comprise entre 20mg/kg de poids vif et 100mg/kg de poids vif lors de la deuxième phase, préférentiellement de l'ordre de 50mg/kg de poids vif.
- pour l'administration de peptides de poids moléculaire d'au moins 1000 daltons, avantageusement de 1000 à 10 000 daltons, la dose hebdomadaire est comprise entre 60mg/kg de poids vif et 120mg/kg de poids vif, et préférentiellement de l'ordre de 84mg/kg de poids vif lors de la première phase puis elle est comprise entre 20mg/kg de poids vif et 40mg/kg de poids vif lors de la deuxième phase, préférentiellement de l'ordre de 28mg/kg de poids vif.
- pour l'administration de 5'-nucléotides, la dose hebdomadaire est comprise entre 9mg/kg de poids vif et 12mg/kg de poids vif, et préférentiellement de l'ordre de 10,5mg/ₖg de poids vif lors de la première phase puis elle est comprise entre 3mg/kg de poids vif et 4mg/kg de poids vif lors de la deuxième phase, préférentiellement de l'ordre de 3,5mg/kg de poids vif.

De manière avantageuse, pour le traitement d'un cannibalisme sévère chez les ruminants, les doses hebdomadaires précédemment citées pour le traitement des porcins et volaille sont multipliées par un facteur 4, soit préférentiellement définies comme suit par animal:
- pour l'administration du dérivé de levure, la dose hebdomadaire est comprise entre 240mg/kg de poids vif et 1200mg/kg de poids vif, et préférentiellement de l'ordre de 600mg/kg de poids vif lors de la première phase puis elle est comprise entre 80mg/kg de poids vif et 400mg/kg de poids vif lors de la deuxième phase, préférentiellement de l'ordre de 200mg/kg de poids vif.
- pour l'administration de peptides de poids moléculaire d'au moins 1000 daltons, avantageusement de 1000 à 10 000 daltons, la dose hebdomadaire est comprise entre 240mg/kg de poids vif et 480mg/kg de poids vif, et préférentiellement de l'ordre de 336mg/kg de poids vif lors de la première phase puis elle est comprise entre 80mg/kg de poids vif et 160mg/kg de poids vif lors de la deuxième phase, préférentiellement de l'ordre de 112mg/kg de poids vif.
- pour l'administration de 5'-nucléotides, la dose hebdomadaire est comprise entre 36mg/kg de poids vif et 48mg/kg de poids vif, et préférentiellement de l'ordre de 42mg/kg de poids vif lors de la première phase puis elle est comprise entre 12mg/kg de poids vif et 16mg/kg de poids vif lors de la deuxième phase, préférentiellement de l'ordre de 14mg/kg de poids vif.

La présente invention a également pour objet l'utilisation d'un dérivé de levure contenant des 5'-nucléotides et/ou peptides d'au moins 1000 daltons, de préférence de 1000 à 10000 daltons, pour la fabrication d'une préparation pour la prévention et/ou le traitement du cannibalisme chez les animaux d'élevage. La présente invention concerne également l'utilisation de 5'-nucléotides et/ou peptides d'au moins 1000 daltons, de préférence de 1000 à 10000 daltons, pour la fabrication d'une préparation pour la prévention et/ou le traitement du cannibalisme chez les animaux d'élevage.

De manière utile, au moins un 5'-nucléotide choisi dans le groupe de 5'-IMP, 5'-GMP, 5'-AMP, 5'-UMP ou 5'-CMP est utilisé pour cette fabrication. Ils sont de préférence utilisés en combinaison d'au moins deux desdits 5'-nucléotides et encore plus préférentiellement en combinaison de trois des dits 5'-nucléotides, plus préférentiellement encore en combinaison de quatre ou cinq des dits 5'-nucléotides. Par exemple, on peut utiliser une combinaison de 5'-IMP avec un 5'-nucléotide choisi dans le groupe formé par les 5'-GMP, 5'-AMP, 5'-UMP et 5'-CMP. On peut aussi utiliser une combinaison de 5'-GMP avec un 5'-nucléotide choisi dans le groupe formé par les 5'-AMP, 5'-UMP et 5'-CMP. On peut également utiliser une combinaison de 5'-AMP avec du 5'UMP ou du 5'-CMP ou encore une combinaison de 5'-UMP avec du 5'-CMP. Une combinaison de 5'-IMP avec une combinaison du groupe formé par : le 5'-GMP et le 5'-AMP, le 5'-GMP et le 5'-UMP, le 5'-GMP et le 5'-CMP, le 5'-AMP et le 5'-UMP, le 5'-AMP et le 5'-CMP, le 5'-UMP et le 5'CMP est également possible. Une autre possibilité est une combinaison de 5'-GMP avec une combinaison du groupe formé par : le 5'-AMP et le 5'-UMP, le 5'AMP et le 5'CMP, le 5'-UMP et le 5'-CMP. On peut aussi utiliser une combinaison de quatre des dits 5'-nucléotides ou encore une combinaison des cinq dits 5'-nucléotides. De préférence on utilise une combinaison de 5'-GMP, 5'-UMP, 5'-CMP et 5'-AMP ; une combinaison de 5'-GMP, 5'-UMP, 5'-CMP et 5'-IMP ; ou une combinaison de 5'-GMP, 5'-UMP, 5'-CMP, 5'-IMP et 5'-AMP.

L'invention concerne aussi l'utilisation, pour la fabrication d'une préparation pour la prévention et/ou le traitement du cannibalisme chez les animaux d'élevage, d'un dérivé de levure, ledit dérivé pouvant être un hydrolysat enzymatique de levure contenant des membranes et/ou fragments de membranes non-hydrosolubles des cellules de levure, ou un extrait de levure obtenu à partir d'un hydrolysat enzymatique de levure par élimination desdits membranes et fragments de membranes, et en particulier un tel dérivé de levure contenant des 5'-nucléotides et/ou des peptides à poids moléculaire d'au moins 1000 daltons, de préférence de 1000 daltons à 10000 daltons. De tels dérivés de levure peuvent notamment être obtenus par les procédés cités ci-dessus favorisant la formation de 5'-nucléotides et/ou de peptides de poids moléculaire d'au moins 1000 daltons.

La levure appartient de préférence au genre *Saccharomyces* ou *Candida.* Des levures appartenant aux espèces *Saccharomyces cerevisiae* et *Candida utilis* sont préférées. Les espèces appartenant au genre *Candida* qui sont alimentaires sont souvent appelées *Torula, Torula* étant donc partiellement synonyme de *Candida.* La levure peut notamment être une levure choisie dans le groupe des levures de boulangerie, levures de brasserie, levures oenologiques et levures de distillerie, et plus de préférence une levure de boulangerie.

De manière avantageuse, ledit dérivé de levure contient au moins 2% en masse, de préférence au moins 3% en masse, plus préférentiellement au moins 4% en masse et encore plus préférentiellement au moins 5% en masse de 5'-nucléotides sur matières sèches, et/ou au moins 4% en masse, de préférence au moins 6% en masse, et encore plus préférentiellement au moins 8% en masse de peptides dérivés de levure de poids moléculaire de 1000 à 10000 daltons sur matières sèches.

Dans un mode de réalisation particulièrement intéressant, l'invention concerne en outre l'utilisation, pour la fabrication d'une préparation pour la prévention et/ou le traitement du cannibalisme chez les animaux d'élevage, d'un dérivé de levure contenant 6,8% de 5'-nucléotides, au moins 6% de peptides de poids moléculaire de 1000 à 10000 daltons, un taux de N total déterminé par la méthode de Kjeldahl d'environ 11,3%, un taux de N aminé mesuré par la méthode de titration de l'azote formol selon S⌀rensen de l'ordre de 4,1% et un taux de protéines (6,25x nitrogène) d'environ 70,6%. Un tel produit, commercialisé par Bio Springer (94701 Maisons-Alfort, France), est décrit plus en détails dans le tableau 1.

La préparation peut en particulier être une préparation pour la prévention et/ou le traitement du cannibalisme chez des animaux d'élevage choisis parmi les bovins, les ovins, les porcins, la volaille et le gibier à plumes.

Ainsi, la préparation peut être une préparation pour la prévention et/ou le traitement de la caudophagie chez les porcins, comme notamment les truies, les porcs à chair et les porcelets à chair. Elle peut également être une préparation destinée à la prévention et/ou au traitement d'un comportement agressif chez les ruminants, de préférence choisis parmi les ovins, les bovins à l'engrais, les bovins reproducteurs, les veaux et les vaches laitières.

La préparation peut également être une préparation pour la prévention et/ou le traitement du piquage chez le gibier à plumes et notamment les faisans, perdrix rouges et grises, cailles et canards à col vert. La préparation peut également être une préparation pour la prévention et/ou le traitement du piquage chez la volaille, en particulier chez les gallinacés tels que les gallinacés choisis parmi les coqs, les chapons, les poules, les poulets, les dindes, les pintades et leurs poussins, de préférence chez les gallinacés choisis parmi les coqs à chair, les chapons à chair, les poulets à chair et les poules pondeuses.

De manière utile, la préparation est une préparation pour administration orale aux animaux d'élevage.

Ainsi, la préparation peut être une préparation solide, telle qu'une préparation sur support solide granuleux, par exemple un aliment complet sous forme de farine, ou sous forme d'aliments granulés, en particulier les aliments granulés obtenus par extrusion, ou sous forme d'une poudre, de microgranules ou de particules.

La préparation peut également être sous forme liquide, de préférence à base d'eau.

De manière préférentielle, la préparation contient le dérivé de levure contenant des 5'-nucléotides et/ou des peptides de poids moléculaire d'au moins 1000 daltons et de préférence 1000 à 10000 daltons et/ou les 5'-nucléotides et/ou les peptides de poids moléculaire d'au moins 1000 daltons et de préférence de 1000 à 10000 daltons et est utilisée en des doses telles qu'elle permet leur administration aux animaux d'élevage dans les doses hebdomadaires utiles précédemment définies. Préférentiellement, la préparation contient les doses hebdomadaires précédemment définies pour l'administration de dérivé de levure contenant des 5'-nucléotides et/ou des peptides de poids moléculaire d'au moins 1000 daltons et de préférence 1000 à 10000 daltons et/ou les doses hebdomadaires utiles précédemment définies pour l'administration de 5'-nucléotides et/ou les doses hebdomadaires utiles précédemment définies pour l'administration de peptides de poids moléculaire d'au moins 1000 daltons et de préférence de1000 à 10000 daltons. Selon un mode particulièrement avantageux, la préparation est utilisée et administrée selon le poids vif de l'animal, en une ou plusieurs fois.

La présente invention concerne également les préparations pouvant être obtenues par les procédés de fabrication suivant l'invention, et les produits alimentaires et les boissons pour animaux les contenant, ainsi que leurs utilisation dans le traitement préventif ou curatif du cannibalisme.

De tels produits alimentaires sont, par exemple, des farines pour porcins, les farines pour poussins, poulets ou poules pondeuses, les mélanges à base de grains ou céréales concassés et/ou entiers pour volailles et gibiers à plumes, tels que des mélanges pour poules pondeuses, des blocs à lécher et des blocs à picoter.

Les préparations, les produits alimentaires et les boissons suivant l'invention peuvent également comprendre un ou plusieurs minéraux alimentaires et/ou une ou plusieurs vitamines.

L'invention peut à la fois être préventive, en empêchant ou retardant l'apparition des problèmes de cannibalisme et de piquage dans un élevage, et/ou curative, en permettant de les diminuer de façon significative dès leur apparition, voire de les éliminer. Un avantage important de la présente invention est que le résultat peut être réalisé sans l'administration aux animaux de produits vétérinaires susceptibles de laisser des traces dans la viande et/ou les oeufs, comme notamment les antibiotiques. Dans un mode particulier, le cannibalisme des animaux d'élevage traité et/ou prévenu selon la présente invention n'est pas dû au stress.

La présente invention est illustrée par les exemples qui suivent, qui doivent être considérés comme illustratifs et ne limitent pas la présente demande.

### EXEMPLE 1

### Composition de l'extrait de levure « EXL »

L'extrait de levure EXL utilisé dans les exemples 2 et 3 est un extrait de levure obtenu par hydrolyse enzymatique d'une levure de l'espèce *Saccharomyces cerevisiae* et élimination de la partie non-hydrosoluble. Cet extrait de levure donne à 5% dans l'eau chaude une solution présentant une légère opalescence. Il se présente sous forme d'une poudre microgranulée permettant sa manipulation sans poussière.

Cet extrait de levure contient environ 10% en masse de peptides entre 1000 daltons et 10000 daltons.

Les propriétés principales du dérivé de levure sont données dans le tableau 1.

Des extraits de levure de ce type sont usuels dans le commerce et peuvent être achetés notamment auprès de la société Bio Springer, 94701 Maisons-Alfort, France, étant entendu que les principaux fabricants mondiaux d'extraits de levure sont fournisseurs à l'intérieur de leur gamme d'hydrolysats de levure et d'extraits de levure d'un extrait de levure de ce type.

**Tableau 1**

| | |
|---|---|
| | |
| Teneur en matières sèches (MS) | 96 % en masse |
| Azote total (N total tel que défini ci-dessus, méthode de Kjeldahl) | 11,3 % en masse |
| Azote aminé (N aminé tel que défini ci-dessus, titration selon S⌀rensen) | 4,1 % en masse |
| Taux de dégradation | 36 % |
| Protéines (azote total x 6,25) | 70,6 % en masse |
| Lipides | 0 % en masse |
| Vitamines | |
| B1 (thiamine) | 13 ppm |
| B2 (riboflavine) | 75 ppm |
| B5 (calcium pantothenate) | 140 ppm |
| B6 (pyroscidine) | 70 ppm |
| PP (niacin) | 450 ppm |
| B12 (cyanocobalamine) | 10 µg/kg |
| Acides aminés libres^{a} | 16, 05% en masse |
| Acides aminés totaux^{a} | 55,21 % en masse |
| 5'-nucléotides totaux^{a} | 6,8 % en masse |
| 5'-CMP^{a} | 0,68 % en masse |
| 5'-UMP^{a} | 1,95 % en masse |
| 5'-GMP^{a} | 1,97 % en masse |
| 5'-IMP^{a} | 2,20 % en masse |

| | |
|---|---|
| a : quantité déterminée en % en masse sur matières sèches | |

### EXEMPLE 2

### Effets de l'extrait de levure EXL sur l'occurrence de caudophagie chez les porcs.

Dans un atelier d'engraissement de porcs à risque de caudophagie connu et récurrent, on apporte l'extrait de levure EXL dans l'eau de boisson pendant 3 semaines consécutives sur la base d'un traitement d'une dose hebdomadaire de 75mg/kg de poids vif administrée en trois fois (25 mg/kg de poids vif/par porc répétés 3 fois par semaine) lors de la première semaine puis d'une dose hebdomadaire de 25mg/kg de poids vif par porc administrée en une fois. L'apport des extraits de levure n'a eu lieu qu'après que des problèmes de caudophagie aient été constatés. Au bout de 3 semaines, on constate que l'apport de l'extrait de levure EXL a divisé l'occurrence de la caudophagie par un facteur supérieur à deux, et ceci de manière significative (p<0.05).

### EXEMPLE 3

### Effet de l'extrait de levure EXL sur la mortalité des poules pondeuses due au piquage

L'effet de l'extrait de levure EXL sur la mortalité des poules pondeuses a été évalué de la 19^{ème} à la 30^{ème} semaine d'âge dans un élevage intensif.

800 poules pondeuses (souche Isa Brown) élevées en cage avec une densité de 5 poules pondeuses par cage ont été nourries avec un aliment à base de blé dont la composition est indiqué dans le tableau 2.

Le dispositif expérimental mis en place lors de cette expérience a été le suivant:
- 400 poules pondeuses sans supplémentation (témoin),
- 400 poules pondeuses supplémentées avec EXL,

L'extrait de levures EXL a été apporté dans l'eau de boisson pendant 12 semaines sur la base d'un traitement théorique d'une dose hebdomadaire de 75mg/kg de poids vif répartie en trois prises (25mg/kg de poids vif par poule) la première semaine puis d'une dose hebdomadaire de 25mg/kg par poule administrée en une fois les semaines suivantes. Ceci revient en pratique à administrer 50g d'extrait de levure pour 1000 poules.

Les conditions sanitaires de cet essai ont été de bonne qualité.

Le tableau 3 présente l'effet de l'extrait de levure EXL sur le pourcentage de mortalité des poules pondeuses.

On constate que la supplémentation en extrait de levure EXL a un effet positif significatif sur la réduction du taux de mortalité des poules pondeuses par rapport au témoin. L'inspection des cadavres montrait que l'extrait de levure EXL non seulement réduit la mortalité des poules, mais entraîne également une réduction importante du pourcentage de cadavres manifestant des lésions dues au piquage.

Cet essai montre clairement que l'extrait de levure EXL est efficace pour réduire la mortalité des poules pondeuses liée au phénomène de piquage.

**Tableau 2**

| Composition et caractéristiques nutritionnelles de l'aliment (en % en masse sur matières sèches) | |
|---|---|
| **Ingrédients** | % |
| Blé | 68,4 |
| Huile de soja | 0,9 |
| Tourteau de soja 44 | 19,9 |
| DL-méthionine | 0,109 |
| Carbonate de calcium | 8,189 |
| Phosphate bicalcique | 1,742 |
| Prémix | 0,400 |

| **Composition nutritionnelle calculée** | |
|---|---|
| EM (kcal/kg) | 2650 |
| Protéines (%) | 16,8 |
| Phosphore disponible (%) | 0,4 |

**Tableau 3**

| Effet de l'extrait de levure EXL sur la mortalité des poules. | |
|---|---|
| Traitement | Taux de mortalité (%) |
| Témoin | 5,1 |
| EXL | 2,2 |

## Revendications

1. Utilisation d'un dérivé de levure contenant des 5'-nucléotides et/ou des peptides d'au moins 1000 daltons, de préférence de 1000 à 10000 daltons, pour la fabrication d'une préparation pour la prévention et/ou le traitement du cannibalisme chez des animaux d'élevage.

2. Utilisation suivant la revendication 1, dans laquelle ledit dérivé de levure contient au moins un 5'-nucléotide choisi dans le groupe de 5'-IMP, 5'-GMP, 5'-AMP, 5'-UMP et 5'-CMP, seuls ou en combinaison(s), de préférence sous forme d'une combinaison d'au moins deux desdits 5'-nucléotides, plus préférentiellement d'une combinaison de trois des dits 5'-nucléotides, et encore plus préférentiellement d'une combinaison de quatre ou cinq des dits 5'-nucléotides.

3. Utilisation suivant la revendication 1 ou 2, dans laquelle le dérivé de levure contenant des 5'-nucléotides et/ou des peptides d'au moins 1000 daltons, est un hydrolysat enzymatique de levure et, de préférence, un extrait de levure.

4. Utilisation suivant l'une quelconque des revendications 1 à 3, dans laquelle la levure appartient au genre *Saccharomyces* ou *Candida,* et de préférence à l'espèce *Saccharomyces cerevisiae* ou à l'espèce *Candida utilis.*

5. Utilisation suivant l'une quelconque des revendications 1 et 4, dans laquelle la levure est une levure choisie dans le groupe des levures de boulangerie, levures de brasserie, levures oenologiques et levures de distillerie, de préférence la levure est une levure de boulangerie.

6. Utilisation suivant l'une quelconque des revendications 1 à 5, dans laquelle le dérivé de levure contient au moins 2% en masse, de préférence au moins 3% en masse, encore plus préférentiellement au moins 4% en masse et encore tout préférentiellement au moins 5 % en masse de 5'-nucléotides sur matières sèches.

7. Utilisation suivant l'une quelconque des revendications 1 à 6, dans laquelle le dérivé de levure contient au moins 4% en masse, de préférence au moins 6% en masse et encore plus préférentiellement au moins 8% en masse de peptides de poids moléculaire de 1000 à 10000 daltons sur matières sèches.

8. Utilisation suivant l'une quelconque des revendications 1 à 7, dans laquelle les animaux d'élevage sont choisis parmi les bovins, les ovins, les porcins, la volaille et le gibier à plumes.

9. Utilisation suivant l'une quelconque des revendications 1 à 7, dans laquelle la préparation est une préparation pour la prévention et/ou le traitement de la caudophagie chez les porcins, et de préférence chez des porcins choisis parmi les truies, les porcs à chair et les porcelets à chair.

10. Utilisation suivant l'une quelconque des revendications 1 à 7, dans laquelle la" préparation est une préparation pour la prévention et/ou le traitement du piquage chez la volaille, et de préférence chez les gallinacés et le gibier à plumes.

11. Utilisation suivant l'une quelconque des revendications 1 à 7, dans laquelle la préparation est une préparation pour la prévention et/ou le traitement du comportement agressif chez les ruminants, et de préférence chez des ruminants choisis parmi les ovins, les bovins à l'engrais, les bovins reproducteurs, veaux et vaches laitières.

12. Utilisation suivant l'une quelconque des revendications précédentes, dans laquelle la préparation est une préparation pour administration orale.

13. Utilisation suivant la revendication 12, dans laquelle la préparation est une préparation solide, de préférence sous forme d'une poudre ou sous forme de microgranules ou sous forme de granules ou particules.

14. Utilisation suivant la revendication 12, dans laquelle la préparation est liquide, de préférence à base d'eau.

15. Utilisation de 5'-nucléotides pour la fabrication d'une préparation pour la prévention et/ou le traitement du cannibalisme chez des animaux d'élevage.

16. Utilisation suivant la revendication 15, dans laquelle les 5'-nucléotides sont choisis dans le groupe de 5'-IMP, 5'-GMP, 5'-AMP, 5'-UMP et 5'-CMP, seuls ou en combinaison(s), de préférence sous forme d'une combinaison d'au moins deux desdits 5'-nucléotides, plus préférentiellement d'une combinaison de trois des dits 5'-nucléotides, et encore plus préférentiellement d'une combinaison de quatre ou cinq des dits 5'-nucléotides.

17. Utilisation suivant la revendication 15 ou 16, dans laquelle au moins une partie et de préférence la totalité des 5'-nucléotides proviennent d'un dérivé de levure contenant des 5'-nucléotides, de préférence sous forme d'un hydrolysat enzymatique de levure contenant des 5'-nucléotides, et de manière encore plus préférée sous forme d'un extrait de levure contenant des 5'-nucléotides.

18. Utilisation suivant la revendication 17, dans laquelle la levure appartient au genre *Saccharomyces* ou *Candida,* et de préférence à l'espèce *Saccharomyces cerevisiae* ou à l'espèce *Candida utilis.*

19. Utilisation suivant la revendication 18, dans laquelle la levure est une levure choisie dans le groupe des levures de boulangerie, levures de brasserie, levures oenologiques et levures de distillerie, de préférence la levure est une levure de boulangerie.

20. Utilisation suivant l'une quelconque des revendications 17 à 19, dans laquelle le dérivé de levure contient au moins 2% en masse, de préférence au moins 3% en masse, encore de préférence au moins 4% en masse et encore plus de préférence au moins 5 % en masse de 5'-nucléotides sur matières sèches.

21. Utilisation suivant l'une quelconque des revendications 17 à 20, dans laquelle le dérivé de levure contient en outre au moins 4% en masse, de préférence au moins 6% en masse et encore plus préférentiellement au moins 8% en masse de peptides de poids moléculaire de 1000 à 10000 daltons sur matières sèches.

22. Utilisation suivant l'une quelconque des revendications 15 à 21, dans laquelle les animaux d'élevage sont choisis parmi les bovins, les ovins, les porcins, la volaille et le gibier à plumes.

23. Utilisation suivant l'une quelconque des revendications 15 à 21, dans laquelle la préparation est une préparation pour la prévention et/ou le traitement de la caudophagie chez les porcins, et de préférence chez des porcins choisis parmi les truies, les porcs à chair et les porcelets à chair.

24. Utilisation suivant l'une quelconque des revendications 15 à 21, dans laquelle préparation est une préparation pour la prévention et/ou le traitement du piquage le gibier à plumes et la volaille, de préférence chez les gallinacés.

25. Utilisation suivant l'une quelconque des revendications 15 à 21, dans laquelle la préparation est une préparation pour la prévention et/ou le traitement du comportement agressif chez les ruminants, et de préférence chez des ruminants choisis les ovins, les bovins à l'engrais, les bovins reproducteurs, veaux et vaches laitières.

26. Utilisation suivant l'une quelconque des revendications 15 à 25, dans laquelle la préparation est une préparation pour administration orale.

27. Utilisation suivant la revendication 26, dans laquelle la préparation est une préparation solide, de préférence sous forme d'une poudre ou sous forme de microgranules ou sous forme de granules ou particules.

28. Utilisation suivant la revendication 26, dans laquelle la préparation est liquide, de préférence à base d'eau.

29. Utilisation de peptides d'au moins 1000 daltons, de préférence de 1000 à 10000 daltons, dérivés de levure pour la fabrication d'une préparation pour la prévention et/ou le traitement du cannibalisme chez des animaux d'élevage.

30. Utilisation suivant la revendication 29, dans laquelle lesdits peptides proviennent d'un dérivé de levure, de préférence sous forme d'un hydrolysat enzymatique de levure, et de manière encore plus préférée sous forme d'un extrait de levure ayant facultativement subi une ultrafiltration.

31. Utilisation suivant la revendication 30, dans laquelle la levure appartient au genre *Saccharomyces* ou *Candida,* et de préférence à l'espèce *Saccharomyces cerevisiae* ou à l'espèce *Candida utilis.*

32. Utilisation suivant la revendication 31, dans laquelle la levure est une levure choisie dans le groupe des levures de boulangerie, levures de brasserie, levures oenologiques et levures de distillerie, de préférence la levure est une levure de boulangerie.

33. Utilisation suivant l'une quelconque des revendications 30 à 32, dans laquelle le dérivé de levure contient au moins 4% en masse, de préférence au moins 6% en masse et encore de préférence au moins 8% en masse de peptides de poids moléculaire de 1000 à 10000 daltons sur matières sèches.

34. Utilisation suivant l'une quelconque des revendications 30 à 33, dans laquelle le dérivé de levure contient de plus au moins 2% en masse, de préférence au moins 3% en masse, encore de préférence au moins 4% en masse et encore plus de préférence au moins 5 % en masse de 5'-nucléotides sur matières sèches

35. Utilisation suivant l'une quelconque des revendications 29 à 34, dans laquelle les animaux d'élevage sont choisis parmi les bovins, les ovins, les porcins, la volaille et le gibier à plumes.

36. Utilisation suivant l'une quelconque des revendications 29 à 34, dans laquelle la préparation est une préparation pour la prévention et/ou le traitement de la caudophagie chez les porcins, et de préférence chez des porcins choisis parmi les truies, les porcs à chair et les porcelets à chair.

37. Utilisation suivant l'une quelconque des revendications 29 à 34, dans laquelle la préparation est une préparation pour la prévention et/ou le traitement du piquage chez le gibier à plumes et la volaille, et de préférence chez les gallinacés.

38. Utilisation suivant l'une quelconque des revendications 29 à 34, dans laquelle la préparation est une préparation pour la prévention et/ou le traitement du comportement agressif chez les ruminants, et de préférence chez des ruminants choisis les ovins, les bovins à l'engrais, les bovins reproducteurs, veaux et vaches laitières.

39. Utilisation suivant l'une quelconque des revendications 29 à 38, dans laquelle la préparation est une préparation pour administration orale.

40. Utilisation suivant la revendication 39, dans laquelle la préparation est une préparation solide, de préférence sous forme d'une poudre ou sous forme de microgranules ou sous forme de granules ou particules.

41. Utilisation suivant la revendication 39, dans laquelle la préparation est liquide, de préférence à base d'eau.

## Claims

1. Use of a yeast derivative containing 5'-nucleotides and/or peptides of at least 1 000 Daltons, preferably from 1 000 to 10 000 Daltons, for the manufacture of a preparation for the prevention and/or the treatment of the cannibalism in livestock.

2. Use according to claim 1, wherein said yeast derivative comprises at least one 5'-nucleotide selected from the group consisting of 5'-IMP, 5'-GMP, 5'-AMP, 5'-UMP and 5'-CMP, alone or in combination(s), preferably in a combination of at least two of said 5'-nucleotides, and more preferably in a combination of three of said 5'-nucleotides and still more preferably in a combination of four or five of said 5'-nucleotides.

3. Use according to claim 1 or 2, wherein said yeast derivative containing 5'-nucleotides and/or peptides of at least 1 000 Daltons is a yeast enzymatic hydrolysate and preferably a yeast extract.

4. Use according to anyone of claims 1 to 3, wherein the yeast belongs to *Saccharomyces* or *Candida* genus, and preferably *Saccharomyces cerevisiae* or *Candida utilis.*

5. Use according to anyone of claims 1 and 4, wherein the yeast is a yeast selected from the group consisting of the baker's yeasts, the brewer's yeasts, the wine yeasts and the distillers' yeasts, preferably the yeast is a baker's yeast.

6. Use according to anyone of claims 1 to 5, wherein the yeast derivative contains at least 2 % in weight, preferably at least 3 % in weight, more preferably at least 4 % in weight and still more preferably at least 5 % in weight of 5'-nucleotides on dry matters.

7. Use according to anyone of claims 1 to 6, wherein the yeast derivative contains at least 4 % in weight, preferably at least 6 % in weight, and more preferably at least 8 % in weight of peptides with molecular weight ranging from 1 000 to 10 000 Daltons on dry matters.

8. Use according to anyone of claims 1 to 7, wherein the livestock is selected from bovine, ovine, porcine, poultry and game birds.

9. Use according to anyone of claims 1 to 7, wherein the preparation is a preparation for the prevention and/or the treatment of the caudophagia in porcine, and preferably in porcine selected from sow, flesh pigs and flesh piglets.

10. Use according to anyone of claims 1 to 7, wherein the preparation is a preparation for the prevention and/or the treatment of the pecking in poultry, and preferably in gallinaceous birds and game birds.

11. Use according to anyone of claims 1 to 7, wherein the preparation is a preparation for the prevention and/or the treatment of aggressive behaviour in ruminants, and preferably in ruminants selected from ovine, fattening cattle, stud-bovines, calves and dairy cows.

12. Use according to anyone of proceeding claims, wherein the preparation is a preparation for oral administration.

13. Use according to claim 12, wherein the preparation is a solid preparation, preferably as powder, microgranules, granules or particles.

14. Use according to claim 12, wherein the preparation is liquid, preferably water-based.

15. Use of 5'-nucleotides for the manufacture of a preparation for the prevention and/or the treatment of the cannibalism in livestock.

16. Use according to claim 15, wherein said 5'-nucleotides are selected from the group consisting of 5'-IMP, 5'-GMP, 5'-AMP, 5'-UMP and 5'-CMP, alone or in combination(s), preferably in a combination of at least two of said 5'-nucleotides, and more preferably in a combination of three of said 5'-nucleotides and still more preferably in a combination of four or five of said 5'-nucleotides.

17. Use according to claim 15 or 16, wherein at least a part and preferably the whole of the 5'-nucleotides comes from a yeast derivative containing 5'-nucleotides, preferably as a yeast enzymatic hydrolysate containing 5'-nucleotides, and more preferably as a yeast extract containing 5'-nucleotides.

18. Use according to claim 17, wherein the yeast belongs to *Saccharomyces* or *Candida* genus, and preferably *Saccharomyces cerevisiae* or *Candida utilis.*

19. Use according to claim 18, wherein the yeast is a yeast selected from the group consisting of the baker's yeasts, the brewer's yeasts, the wine yeasts and the distillers' yeasts, preferably the yeast is a baker's yeast.

20. Use according to anyone of claims 17 to 19, wherein the yeast derivative contains at least 2 % in weight, preferably at least 3 % in weight, more preferably at least 4 % in weight and still more preferably at least 5 % in weight of 5'-nucleotides on dry matters.

21. Use according to anyone of claims 17 to 20, wherein the yeast derivative further contains at least 4 % in weight, preferably at least 6 % in weight, and more preferably at least 8 % in weight of peptides with molecular weight ranging from 1 000 to 10 000 Daltons on dry matters.

22. Use according to anyone of claims 15 to 21, wherein the livestock is selected from bovine, ovine, porcine, poultry and game birds.

23. Use according to anyone of claims 15 to 21, wherein the preparation is a preparation for the prevention and/or the treatment of the caudophagia in porcine, and preferably in porcine selected from sow, flesh pigs and flesh piglets.

24. Use according to anyone of claims 15 to 21, wherein the preparation is a preparation for the prevention and/or the treatment of the pecking in game birds and poultry, and preferably in gallinaceous birds.

25. Use according to anyone of claims 15 to 21, wherein the preparation is a preparation for the prevention and/or the treatment of aggressive behaviour in ruminants, and preferably in ruminants selected from ovine, fattening cattle, stud-bovines, calves and dairy cows.

26. Use according to anyone of claims 15 to 25, wherein the preparation is a preparation for oral administration.

27. Use according to claim 26, wherein the preparation is a solid preparation, preferably as powder, microgranules, granules or particles.

28. Use according to claim 26, wherein the preparation is liquid, preferably water-based.

29. Use of peptides of at least 1 000 Daltons, preferably from 1 000 to 10 000 Daltons, derived from yeast for the manufacture of a preparation for the prevention and/or the treatment of the cannibalism in livestock.

30. Use according to claim 29, wherein said peptides come from a yeast derivative, preferably as a yeast enzymatic hydrolysate, and more preferably as a yeast extract optionally submitted to an ultra filtration.

31. Use according to claim 30, wherein the yeast belongs to *Saccharomyces* or *Candida* genus, and preferably *Saccharomyces cerevisiae* or *Candida utilis.*

32. Use according to claim 31, wherein the yeast is a yeast selected from the group consisting of the baker's yeasts, the brewer's yeasts, the wine yeasts and the distillers' yeasts, preferably the yeast is a baker's yeast.

33. Use according to anyone of claims 30 to 32, wherein the yeast derivative contains at least 4 % in weight, preferably at least 6 % in weight, and more preferably at least 8 % in weight of peptides with molecular weight ranging from 1 000 to 10 000 Daltons on dry matters.

34. Use according to anyone of claims 30 to 33, wherein the yeast derivative further contains at least 2 % in weight, preferably at least 3 % in weight, more preferably at least 4 % in weight and still more preferably at least 5 % in weight of 5'-nucleotides on dry matters.

35. Use according to anyone of claims 29 to 34, wherein the livestock is selected from bovine, ovine, porcine, poultry and game birds.

36. Use according to anyone of claims 29 to 34, wherein the preparation is a preparation for the prevention and/or the treatment of the caudophagia in porcine, and preferably in porcine selected from sow, flesh pigs and flesh piglets.

37. Use according to anyone of claims 29 to 34, wherein the preparation is a preparation for the prevention and/or the treatment of the pecking in poultry, and preferably in gallinaceous birds and game birds.

38. Use according to anyone of claims 29 to 34, wherein the preparation is a preparation for the prevention and/or the treatment of aggressive behaviour in ruminants, and preferably in ruminants selected from ovine, fattening cattle, stud-bovines, calves and dairy cows.

39. Use according to anyone of claims 29 to 38, wherein the preparation is a preparation for oral administration.

40. Use according to claim 39, wherein the preparation is a solid preparation, preferably as powder, microgranules, granules or particles.

41. Use according to claim 39, wherein the preparation is liquid, preferably water-based.

## Patentansprüche

1. Verwendung eines 5'-Nucleotide und/oder Peptide mit mindestens 1000 Dalton, vorzugsweise 1000 bis 10000 Dalton enthaltenden Hefederivats zur Herstellung eines Präparats für die Prävention und/oder Behandlung des Kannibalismus bei Zuchttieren.

2. Verwendung nach Anspruch 1, bei der das genannte Hefederivat mindestens ein 5'-Nucleotid enthält, ausgewählt aus der Gruppe, die besteht aus 5'-IMP, 5'-GMP, 5'-AMP, 5'-UMP und 5'-CMP, allein oder in Kombination(en), vorzugsweise in Form einer Kombination von mindestens zwei der genannten 5'-Nucleotide, besonders bevorzugt einer Kombination von drei der genannten 5'-Nucleotide und ganz besonders bevorzugt einer Kombination von vier oder fünf der genannten 5'-Nucleotide.

3. Verwendung nach Anspruch 1 oder 2, bei der das 5'-Nucleotide und/oder Peptide mit mindestens 1000 Dalton enthaltende Hefederivat ein enzymatisches Hydrolysat von Hefe und vorzugsweise ein Hefeextrakt ist.

4. Verwendung nach einem der Ansprüche 1 bis 3, bei der die Hefe zu dem Genus Saccharomyces oder Candida und vorzugsweise zu der Spezies Saccharomyces cerevisiae oder der Spezies Candida utilis gehört.

5. Verwendung nach einem der Ansprüche 1 bis 4, bei der die Hefe eine Hefe ist, die ausgewählt ist aus der Gruppe der Bäckerhefen, der Bierhefen, der Weinhefen und der Destillationshefen, vorzugsweise die Hefe eine Bäckerhefe ist.

6. Verwendung nach einem der Ansprüche 1 bis 5, bei der das Hefederivat mindestens 2 Massenprozent, vorzugsweise mindestens 3 Massenprozent, besonders bevorzugt mindestens 4 Massenprozent und ganz besonders bevorzugt mindestens 5 Massenprozent 5'-Nucleotide, als Trockenmaterial, enthält.

7. Verwendung nach einem der Ansprüche 1 bis 6, bei der das Hefederivat mindestens 4 Massenprozent, vorzugsweise mindestens 6 Massenprozent und besonders bevorzugt mindestens 8 Massenprozent Peptide mit einem Molekulargewicht von 1000 bis 10000 Dalton, als Trockenmaterial, enthält.

8. Verwendung nach einem der Ansprüche 1 bis 7, bei der die Zuchttiere ausgewählt werden aus der Gruppe der Rinder, Schafe, Schweine, Geflügel und Federwild.

9. Verwendung nach einem der Ansprüche 1 bis 7, bei der das Präparat ein Präparat für die Prävention und/oder Behandlung der Caudophagie bei Schweinen und vorzugsweise bei Schweinen, die ausgewählt sind aus der Gruppe der Mutterschweine, der Mastschweine und der Mastferkel, ist.

10. Verwendung nach einem der Ansprüche 1 bis 7, bei der das Präparat ein Präparat für die Prävention und/oder Behandlung des Pickens bei Geflügel und vorzugsweise bei Hühnervögeln und Federwild ist.

11. Verwendung nach einem der Ansprüche 1 bis 7, bei der das Präparat ein Präparat für die Prävention und/oder Behandlung eines aggressiven Verhaltens bei Wiederkäuern und vorzugsweise bei Wiederkäuern, die ausgewählt sind aus der Gruppe der Schafen, Mastrinder, Zuchtrinder, Kälbern und Milchkälber, ist.

12. Verwendung nach einem der vorhergehenden Ansprüche, bei der das Präparat ein Präparat für die orale Verabreichung ist.

13. Verwendung nach Anspruch 12, bei der das Präparat ein festes Präparat, vorzugsweise ein Pulver oder ein Mikrogranulat ist oder in Form von Körnchen oder Teilchen vorliegt.

14. Verwendung nach Anspruch 12, bei der das Präparat flüssig ist, vorzugsweise eine Flüssigkeit auf Wasserbasis ist.

15. Verwendung von 5'-Nucleotiden zur Herstellung eines Präparats für die Prävention und/oder Behandlung des Kannibalismus bei Zuchttieren.

16. Verwendung nach Anspruch 15, bei der die 5'-Nucleotide aus der Gruppe ausgewählt sind, die besteht aus 5'-IMP, 5'-GMP, 5'-AMP, 5'-UMP und 5'-CMP, allein oder in Kombination(en), vorzugsweise in Form einer Kombination von mindestens zwei der genannten 5'-Nucleotide, besonders bevorzugt einer Kombination von drei der genannten 5'-Nucleotide und ganz besonders bevorzugt einer Kombination von vier oder fünf der genannten 5'-Nucleotide.

17. Verwendung nach Anspruch 15 oder 16, bei der mindestens ein Teil und vorzugsweise die Gesamtmenge der 5'-Nucleotide aus einem 5'-Nucleotide enthaltenden Hefederivat stammt, vorzugsweise in Form eines enzymatischen Hydrolysats von Hefe, das 5'-Nucleotide enthält und besonders bevorzugt in Form eines Hefeextrakts, der 5'-Nucleotide enthält, vorliegt.

18. Verwendung nach Anspruch 17, bei der die Hefe zu dem Genus Saccharomyces oder Candida und vorzugsweise zu der Spezies Saccharomyces cerevisiae oder der Spezies Candida utilis gehört.

19. Verwendung nach Anspruche 18, bei der die Hefe eine Hefe ist, die ausgewählt ist aus der Gruppe der Bäckerhefen, der Bierhefen, der Weinhefen und der Destillationshefen, vorzugsweise die Hefe eine Bäckerhefe ist.

20. Verwendung nach einem der Ansprüche 17 bis 19, bei der das Hefederivat mindestens 2 Massenprozent, vorzugsweise mindestens 3 Massenprozent, besonders bevorzugt mindestens 4 Massenprozent und ganz besonders bevorzugt mindestens 5 Massenprozent 5'-Nucleotide, als Trockenmaterial, enthält.

21. Verwendung nach einem der Ansprüche 17 bis 20, bei der das Hefederivat außerdem mindestens 4 Massenprozent, vorzugsweise mindestens 6 Massenprozent und besonders bevorzugt mindestens 8 Massenprozent Peptide mit einem Molekulargewicht von 1000 bis 10000 Dalton, als Trockenmaterial, enthält.

22. Verwendung nach einem der Ansprüche 15 bis 21, bei der die Zuchttiere ausgewählt werden aus der Gruppe der Rinder, Schafe, Schweine, Geflügel und Federwild.

23. Verwendung nach einem der Ansprüche 15 bis 21, bei der das Präparat ein Präparat für die Prävention und/oder Behandlung der Caudophagie bei Schweinen und vorzugsweise bei Schweinen, die ausgewählt sind aus der Gruppe der Mutterschweine, der Mastschweine und der Mastferkel, ist.

24. Verwendung nach einem der Ansprüche 15 bis 21, bei der das Präparat ein Präparat für die Prävention und/oder Behandlung des Pickens bei Federwild und Geflügel und vorzugsweise bei Hühnervögeln ist.

25. Verwendung nach einem der Ansprüche 15 bis 21, bei der das Präparat ein Präparat für die Prävention und/oder Behandlung eines aggressiven Verhaltens bei Wiederkäuern und vorzugsweise bei Wiederkäuern, die ausgewählt sind aus der Gruppe der Schafe, Mastrinder, Zuchtrinder, Kälber und Milchkälber, ist.

26. Verwendung nach einem der Ansprüche 15 bis 25, bei der das Präparat ein Präparat für die orale Verabreichung ist.

27. Verwendung nach Anspruch 26, bei der das Präparat ein festes Präparat, vorzugsweise ein Pulver oder ein Mikrogranulat ist oder in Form von Körnchen oder Teilchen vorliegt.

28. Verwendung nach Anspruch 26, bei der das Präparat flüssig ist, vorzugsweise eine Flüssigkeit auf Wasserbasis ist.

29. Verwendung von Peptiden mit mindestens 1000 Dalton, vorzugsweise 1000 bis 10000 Dalton, Hefederivaten zur Herstellung eines Präparats für die Prävention und/oder Behandlung des Kannibalismus bei Zuchttieren.

30. Verwendung nach Anspruch 29, bei der die genannten Peptide aus einem Hefederivat stammen, vorzugsweise in Form eines enzymatischen Hydrolysats von Hefe und besonders bevorzugt in Form eines Hefeextrakts, der gegebenenfalls einer Ultrafiltration unterzogen wurde.

31. Verwendung nach Anspruche 30, bei der die Hefe zu dem Genus Saccharomyces oder Candida und vorzugsweise zu der Spezies Saccharomyces cerevisiae oder der Spezies Candida utilis gehört.

32. Verwendung nach Anspruch 31, bei der die Hefe eine Hefe ist, ausgewählt aus der Gruppe der Bäckerhefen, der Bierhefen, der Weinhefen und der Destillationshefen, vorzugsweise die Hefe eine Bäckerhefe ist.

33. Verwendung nach einem der Ansprüche 30 bis 32, bei der das Hefederivat mindestens 4 Massenprozent, vorzugsweise mindestens 6 Massenprozent und besonders bevorzugt mindestens 8 Massenprozent Peptide mit einem Molekulargewicht von 1000 bis 10000 Dalton, als Trockenmaterial, enthält.

34. Verwendung nach einem der Ansprüche 30 bis 33, bei der das Hefederivat außerdem mindestens 2 Massenprozent, vorzugsweise mindestens 3 Massenprozent, besonders bevorzugt 4 Massenprozent und ganz besonders bevorzugt mindestens 5 Massenprozent 5'-Nucleotide, als Trockenmaterial, enthält.

35. Verwendung nach einem der Ansprüche 29 bis 34, bei der die Zuchttiere ausgewählt werden aus der Gruppe der Rinder, Schafe, Schweine, Geflügel und Federwild.

36. Verwendung nach einem der Ansprüche 29 bis 34, bei der das Präparat ein Präparat für die Prävention und/oder Behandlung der Caudophagie bei Schweinen und vorzugsweise bei Schweinen, die ausgewählt sind aus der Gruppe der Mutterschweine, der Mastschweine und der Mastferkel, ist.

37. Verwendung nach einem der Ansprüche 29 bis 34, bei der das Präparat ein Präparat für die Prävention und/oder Behandlung des Pickens bei Federwild und Geflügel und vorzugsweise bei Hühnervögeln ist.

38. Verwendung nach einem der Ansprüche 29 bis 34, bei der das Präparat ein Präparat für die Prävention und/oder Behandlung eines aggressiven Verhaltens bei Wiederkäuern und vorzugsweise bei Wiederkäuern, die ausgewählt sind aus der Gruppe der Schafe, Mastrinder, Zuchtrinder, Kälber und Milchkälber, ist.

39. Verwendung nach einem der vorhergehenden Ansprüche 29 bis 38, bei der das Präparat ein Präparat für die orale Verabreichung ist.

40. Verwendung nach Anspruch 39, bei der das Präparat ein festes Präparat, vorzugsweise ein Pulver oder Mikrogranulat ist oder in Form von Körnchen oder Teilchen vorliegt.

41. Verwendung nach Anspruch 39, bei der das Präparat flüssig ist, vorzugsweise eine Flüssigkeit auf Wasserbasis ist.
